# EUROPEAN PATENT APPLICATION

(11) **EP 2 320 367 A1**
(43) Date of publication of application: **11.05.2011**
(21) Application number: 09773622.7
(22) Date of filing: 02.02.2009
(51) Int. Cl.: G06Q 20/00

(54) **RECHARGE AMOUNT TRANSFER SYSTEM AND METHOD FOR ELECTRONIC PAYMENT MEANS USING PORTABLE PHONE**

(30) Priority: 30.06.2008 KR 20080062602
(71) Applicant: T-Monet Co., Ltd., Seoul 100-013 (KR)
(72) Inventor: HWANG, Jin Woo, Yongin-si Gyeonggi-do 448-754 (KR); LEE, Seon Ku, Goyang-si Gyeonggi-do 410-728 (KR); PARK, Jin Woo, Seoul 135-976 (KR)
(74) Representative: Romedahl, Bengt
(86) International application number: PCT/KR2009/000489
(87) International publication number: WO 2010/002086

(57) **Abstract**

The present invention relates to a recharge amount transfer system for an electronic payment means using a portable phone. The present invention comprises: a first user terminal that indexes a recharge balance stored in a first electronic settlement payment means according to recharge amount transfer request information input by a first user, transmits a generated recharge amount transfer request SMS if the amount to be transferred is less than the recharge balance, receives a first recharge amount transfer completion SMS, and updates the recharge balance stored in the first electronic settlement payment means; a recharge server that indexes the first user information already stored according to the recharge amount transfer request SMS, generates and transmits a recharge amount transfer confirmation request SMS accordingly, receives a recharge amount transfer confirmation SMS, updates the first and second user information already stored in a recharge storage DB, and transmits the generated first and second recharge amount transfer completion SMS; and a second user terminal unit that receives the recharge amount transfer confirmation request SMS, generates and transmits a recharge amount transfer confirmation SMS according to the recharge amount transfer confirmation information input by a second user, receives the second recharge amount transfer completion SMS, and updates the recharge balance stored in a second electronic settlement payment means.

## Description

### Technical Field

The present invention relates to a system and method for transferring the charged money of electronic payment means using a mobile phone, and, more particularly, to a system and method for transferring the charged money of electronic payment means using a mobile phone, wherein the money charged into the electronic payment means of a first user terminal is transferred to the electronic payment means of a second user terminal via a charging server over an information communication network.

### Background Art

Smart cards are electronic credit cards having an Integrated Circuit (IC) storage device and storing a large amount of information, and are classified into memory-type smart cards, microprocessor-equipped smart cards, and interactive smart cards.

Memory-type smart cards are smart cards not equipped with a microprocessor, and are divided into a type which is chiefly used in the fields capable of being treated as securities, such as prepaid cards or article purchase warrants, and which includes a security device, in addition to memory, and a type which is used to purely store data, such as health insurance cards, and which contains only memory.

Microprocessor-equipped smart cards have an embedded microprocessor and memory, and are capable of performing functions, such as determination, operations, and data protection. Interactive smart cards have a microprocessor, memory, an I/O protocol and an application program embedded therein, and support the bidirectional transfer of information.

The interactive smart cards chiefly being used have smart card ID information and charged money information stored in Universal Subscriber Identity Modules (USIMs), and act as payment means when a user renders the purchase of goods or the bus fare.

Smart cards are replaceable by credit cards. However, credit cards are difficult for students, including teenagers, to use because the criteria for issuing credit cards are complicated. Furthermore, lots of users prefer charging-type smart cards because a vast amount of loss is incurred when issued credit cards are lost.

However, smart cards must be charged with money to be used so that there is a certain amount of remaining charged money. This charging process is inconvenient in that users should carry cash, visit places where charging means are placed and charge smart cards with money, or should perform user identification and charging and payment via financial institutions using recording media, such as computers, on-line.

### Disclosure

### Technical Problem

Accordingly, the present invention has been made keeping in mind the above problems occurring in the prior art, and an object of the present invention is to provide a system and method for transferring the charged money of electronic payment means using a mobile phone, in which a user can wirelessly transfer the money, charged in the electronic payment means of a first user terminal, to the electronic payment means of a second user terminal via a charging server even without visiting a place where charging means have been placed or without performing user identification and complicated charging and payment via a financial institution using a recording medium, such as a computer, on-line.

### Technical Solution

In order to accomplish the above objects, a system for transferring the amount of charged money of electronic payment means using a mobile phone according to a first embodiment of the present invention includes a first user terminal for indexing the amount of remaining charged money stored in first electronic payment means based on charged money transfer request information received from a first user, sending a generated charged money transfer request SMS message if the amount of money to be transferred is smaller than the amount of remaining charged money, receiving a first charged money transfer completion SMS message, and updating the amount of remaining charged money stored in the first electronic payment means; a charging server for indexing first user information previously stored in response to the charged money transfer request SMS message, generating and sending a charged money transfer confirmation request SMS message, receiving a charged money transfer confirmation SMS message, updating the first and second user information previously stored in a charging and storage DB, and sending the first and second charged money transfer completion SMS messages generated; and a second user terminal for receiving the charged money transfer confirmation request SMS message, generating and sending a charged money transfer confirmation SMS message based on charged money transfer confirmation information received from a second user, receiving the second charged money transfer completion SMS message, and updating the amount of remaining charged money stored in a second electronic payment means.

The first user terminal may include first input means for receiving the charged money transfer request information in response to a manipulation of the first user; first electronic payment means for storing the amount of remaining charged money of the first user, an ID number of the first user terminal, the charged money transfer request information, and charged money transfer completion information; first control means for indexing the amount of remaining charged money, stored in the first electronic payment means, based on the charged money transfer request information, generating the charged money transfer request SMS message if the money to be transferred is smaller than the amount of remaining charged money, updating the amount of remaining charged money stored in the first electronic payment means based on the first charged money transfer completion SMS message, and generating the charged money transfer confirmation information, indicating completion of charging, based on the updating of the amount of remaining charged money; first communication means for sending the charged money transfer request SMS message and receiving the first charged money transfer completion SMS message; and first output means for outputting the charged money transfer request information, the amount of remaining charged money, the charged money transfer request SMS message, the first charged money transfer completion SMS message, and the charged money transfer confirmation information.

The charged money transfer request information may include the money to be transferred, the ID number of the second user terminal and the ID number of the first user.

The updating of the amount of remaining charged money stored in the first electronic payment means may be performed by updating the amount of remaining charged money included in the first user information by subtracting the money requested to be transferred, included in the charged money transfer request information, from the amount of remaining charged money of the first user, stored in the first electronic payment means, in response to the first charged money transfer completion SMS message.

The charging server may include second communication means for sending the charged money transfer confirmation request SMS message in response to the received charged money transfer request SMS message, and sending the first and second charged money transfer completion SMS messages in response to the received charged money transfer confirmation SMS message; charging and storage DB for storing the first and second user information, the charged money transfer confirmation request SMS message, the charged money transfer confirmation SMS message, and the first and second charged money transfer completion SMS messages; and charge money transfer means for generating the charged money transfer confirmation request SMS message by indexing the first user information based on the charged money transfer request SMS message, subtracting the money requested to be transferred, included in the charged money transfer request information, from the amount of remaining charged money of the first user, previously stored in the charging and storage DB, based on the charged money transfer confirmation SMS message, updating the first and second user information by increasing or decreasing the amount of remaining charged money of the second user by a reduced amount of money, and generating the first and second charged money transfer completion SMS messages.

The first and second user information may include the ID numbers of the first and second users, the ID numbers of the first and second user terminals, and the remaining amounts of charged money of the first and second users.

The second user terminal may include third communication means for sending the charged money transfer confirmation SMS message in response to the received charged money transfer confirmation request SMS message, and receiving the second charged money transfer completion SMS message; second input means for receiving the charged money transfer confirmation information in response to a manipulation of the second user; second electronic payment means for storing the amount of remaining charged money of the second user, an ID number of the second user terminal, the charged money transfer confirmation information, and the charged money transfer completion information; second control means for generating the charged money transfer confirmation SMS message based on the charged money transfer request information and the charged money transfer confirmation request SMS message, updating the amount of remaining charged money, stored in the second electronic payment means, based on the second charged money transfer completion SMS message, and generating the charged money transfer completion information, indicating the updating of charging, based on the updating of the amount of remaining charged money; and second output means for outputting the charged money transfer confirmation request SMS message, the charged money transfer confirmation information, the amount of remaining charged money, the charged money transfer confirmation SMS message, the second charged money transfer completion SMS message, and the charged money transfer completion information.

The updating of the amount of remaining charged money stored in the second electronic payment means may be performed by updating the amount of remaining charged money stored in the second user information by increasing or decreasing the amount of money to be transferred, included in the charged money transfer confirmation information, based on the amount of remaining charged money of the second user, previously stored in the second electronic payment means, based on the second charged money transfer completion SMS message.

Meanwhile, a method of transferring the amount of charged money of electronic payment means using a mobile phone includes a first process of a first user terminal indexing the amount of remaining charged money based on charged money transfer request information received from a first user, generating a charged money transfer request SMS message if the amount of money to be transferred is smaller than the amount of remaining charged money, and sending the charged money transfer request SMS message to a charging server; a second process of the charging server generating a charged money transfer confirmation request SMS message by indexing first user information and sending the charged money transfer confirmation request SMS message to a second user terminal; a third process of the second user terminal receiving the charged money transfer confirmation request SMS message, generating a charged money transfer confirmation SMS message based on charged money transfer confirmation information received from a second user, and sending the charged money transfer confirmation SMS message to the charging server; a fourth process of the charging server updating the first user information and second user information based on the charged money transfer confirmation SMS message, generating a first charged money transfer completion SMS message, sending the first charged money transfer completion SMS message to the first user terminal, generating a second charged money transfer completion SMS message, and sending the second charged money transfer completion SMS message to the second user terminal; a fifth process of the first user terminal updating the amount of remaining charged money based on the first charged money transfer completion SMS message, generating charged money transfer confirmation information indicating the completion of charging based on the updating of the amount of remaining charged money, and sending the charged money transfer confirmation information to the first user; and a sixth process of the second user terminal updating the amount of remaining charged money based on the second charged money transfer completion SMS message, generating charged money transfer completion information indicating the completion of charging based on the updating of the amount of remaining charged money, and sending the charged money transfer completion information to the second user.

The method may further include a seventh process of receiving charged money transfer request information from the first user again if the money to be transferred is greater than the indexed amount of remaining charged money during the first process.

The method may further include, after the sixth process an eighth process of a first user terminal generating a charged money transfer withdrawal SMS message based on charged money transfer withdrawal request information received from the first user and sending the charged money transfer withdrawal SMS message to a charging server; a ninth process of the charging server updating first and second user information by indexing first and second user information corresponding to the charged money transfer withdrawal SMS message, generating a first charged money transfer withdrawal completion SMS message, sending the first charged money transfer withdrawal completion SMS message to the first user terminal, generating a second charged money transfer withdrawal completion SMS message, and sending the second charged money transfer withdrawal completion SMS message to a second user terminal; a tenth process of the first user terminal updating the amount of remaining charged money based on the first charged money transfer withdrawal completion SMS message, generating charged money transfer withdrawal completion information indicating the completion of charging based on the updating of the amount of remaining charged money, and sending the charged money transfer withdrawal completion information to the first user; and an eleventh process of the second user terminal updating the amount of remaining charged money based on the second charged money transfer withdrawal completion SMS message, generating charged money transfer withdrawal completion information indicating the completion of charging based on the updating of the amount of remaining charged money, and sending the charged money transfer withdrawal completion information to the second user.

The method may further include, after the sixth process a twelfth process of a second user terminal generating a charged money transfer rejection SMS message based on charged money transfer rejection request information received from the second user and sending the charged money transfer rejection SMS message to a charging server; a thirteenth process of the charging server updating first and second user information by indexing the first and second user information corresponding to the charged money transfer rejection SMS message, generating a second charged money transfer rejection completion SMS message, sending the second charged money transfer rejection completion SMS message to the second user terminal, generating a first charged money transfer withdrawal completion SMS message, and sending the first charged money transfer withdrawal completion SMS message to a first user terminal; a fourteenth process of the second user terminal updating the amount of remaining charged money based on the second charged money transfer rejection completion SMS message, generating charged money transfer rejection completion information indicating rejection of a transfer of the amount of charged money based on the updating of the amount of remaining charged money, and sending the charged money transfer rejection completion information to the second user; and a fifteenth process of the first user terminal updating the amount of remaining charged money based on the first charged money transfer rejection completion SMS message, generating charged money transfer rejection completion information indicating rejection of a transfer of the amount of charged money based on the updating of the amount of remaining charged money, and sending the charged money transfer rejection completion information to the first user.

Meanwhile, a method of transferring the amount of charged money of electronic payment means using a mobile phone according to a second embodiment of the present invention includes a sixteenth process of a charging server sending a charged money transfer confirmation request SMS message, generated by indexing first user information based on a charged money transfer request SMS message received from a first user terminal (100), to the first user terminal; a seventeenth process of the first user terminal updating the amount of remaining charged money stored therein by subtracting the amount of remaining charged money based on the charged money transfer confirmation request SMS message, generating a first charged money transfer completion SMS message, and sending the first charged money transfer completion SMS message to a first user 10 and the charging server; an eighteenth process of the charging server updating the amount of remaining charged money of the indexed first user information by subtracting the amount of remaining charged money based on the first charged money transfer completion SMS message, and sending a charged money transfer confirmation request SMS message, generated by indexing second user information, to a second user terminal; a nineteenth process of the second user terminal updating the amount of remaining charged money stored therein by increasing or decreasing the amount of remaining charged money based on charged money transfer confirmation information received from a second user, generating a second charged money transfer completion SMS message, and sending the second charged money transfer completion SMS message to the charging server and the second user; and a twentieth process of the charging server (200) updating the amount of remaining charged money of the indexed second user by increasing or decreasing the amount of remaining charged money of the indexed second user based on the second charged money transfer completion SMS message.

The method may further include a twenty-first process of the first user terminal sending a charged money transfer withdrawal SMS message, generated based on charged money transfer withdrawal request information received from the first user, to the charging server; a twenty-second process of the charging server, when first charged money transfer withdrawal SMS message is received before the sixteenth process is performed, updating the amount of remaining charged money of the first user by increasing or decreasing the amount of remaining charged money, generating a first charged money transfer withdrawal completion SMS message, and sending the first charged money transfer withdrawal completion SMS message to the first user terminal; and a twenty-third process of the first user terminal updating the amount of charged money stored therein by increasing or decreasing the amount of charged money stored therein based on the first charged money transfer withdrawal completion SMS message, generating charged money transfer withdrawal completion information, and sending the charged money transfer withdrawal completion information to the first user.

### Advantageous Effects

According to the present invention, the money charged in the electronic payment means of a first user terminal is wirelessly transferred to the electronic payment means of a second user terminal via a charging server over an information communication network, so that the present invention is advantageous in that a user can transfer the charged money stored in a terminal to another user terminal even without visiting a place where charging means has been placed or without performing user identification and complicated charging and payment via a financial institution using a recording medium, such as a computer, on-line.

Furthermore, the present invention is advantageous in that a user can transfer the amount of charged money to another user terminal even when without cash, a credit card, a bank account, and mileage.

### Description of Drawings

FIG. 1 shows the construction of a system S for transferring the charged money of electronic payment means using a mobile phone according to a first embodiment of the present invention;
FIG. 2 is a diagram showing the relationship between the elements of a first user terminal 100 in the system for transferring the charged money of electronic payment means using a mobile phone according to the first embodiment of the present invention;
FIG. 3 is a diagram showing the relationship between the elements of a charging server 200 in the system for transferring the charged money of electronic payment means using a mobile phone according to the first embodiment of the present invention;
FIG. 4 is a diagram showing the relationship between the elements of a second user terminal 300 in the system for transferring the charged money of electronic payment means using a mobile phone according to the first embodiment of the present invention;
FIG. 5 is a flowchart illustrating a method of transferring the charged money of electronic payment means using a mobile phone according to a first embodiment of the present invention;
FIG. 6 is a flowchart illustrating the relationship between the elements in the method of transferring the charged money of electronic payment means using a mobile phone according to the first embodiment of the present invention;
FIG. 7 is a flowchart illustrating an example of the first user terminal 100 in the method of transferring the charged money of electronic payment means using a mobile phone according to the first embodiment of the present invention;
FIG. 8 is a flowchart illustrating an example of the second user terminal 300 in the method of transferring the charged money of electronic payment means using a mobile phone according to the first embodiment of the present invention;
FIG. 9 is a flowchart illustrating a method of withdrawing the amount of charged money in the method of transferring the charged money of electronic payment means using a mobile phone according to the first embodiment of the present invention;
FIG. 10 is a flowchart illustrating a method of rejecting the amount of charged money in the method of transferring the charged money of electronic payment means using a mobile phone according to the first embodiment of the present invention;
FIG. 11 is a flowchart illustrating a method of transferring the charged money of electronic payment means using a mobile phone according to a second embodiment of the present invention; and
FIG. 12 is a flowchart illustrating a method of withdrawing the amount of charged money in the method of transferring the charged money of electronic payment means using a mobile phone according to the second embodiment of the present invention.

### <Description of reference numerals of principal elements in the drawings>

S: system for transferring the charged money of electronic payment means using a mobile phone
10: first user 20: second user
100: first user terminal 110: first input means
120: first electronic payment means
130: first control means 150: first output means
140: first communication means
200: charging server 300: second user terminal
210: second communication means
220: charging and storage DB
230: charge money transfer means
310: third communication means
320: second input means 340: second control means
330: second electronic payment means
350: second output means

### Best Mode

The detailed characteristics and advantages of the present invention will become more apparent from the following detailed description taken in conjunction with the accompanying drawings. The terms or words used in the specification and the claims should be interpreted to have meanings and concepts which coincide with the technical spirit of the present invention on the basis of the principle that an inventor may appropriately define the concepts of the terms in order to describe his invention in the best way. Furthermore, a detailed description of the known functions or elements related to the present invention will be omitted if it has been deemed that it would make the gist of the present invention unnecessarily vague.

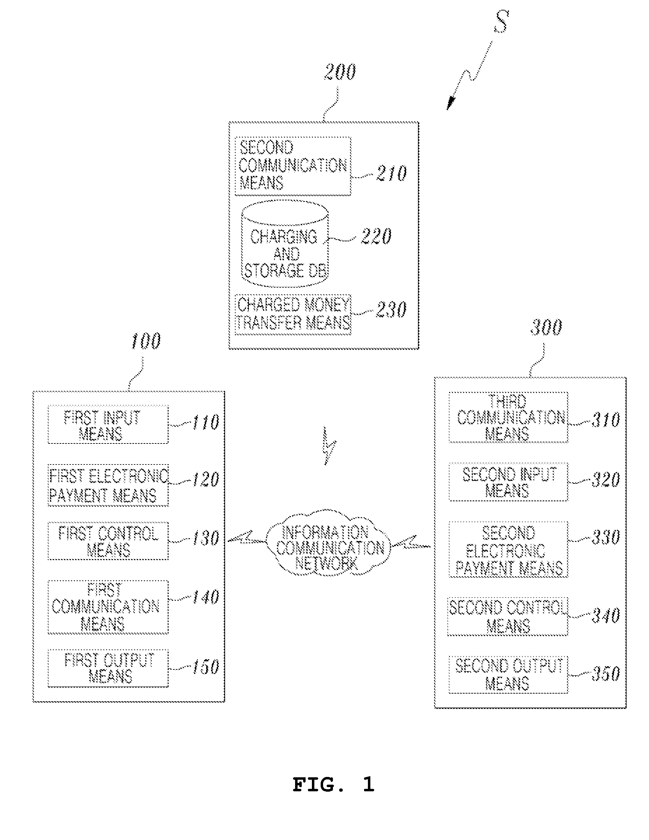

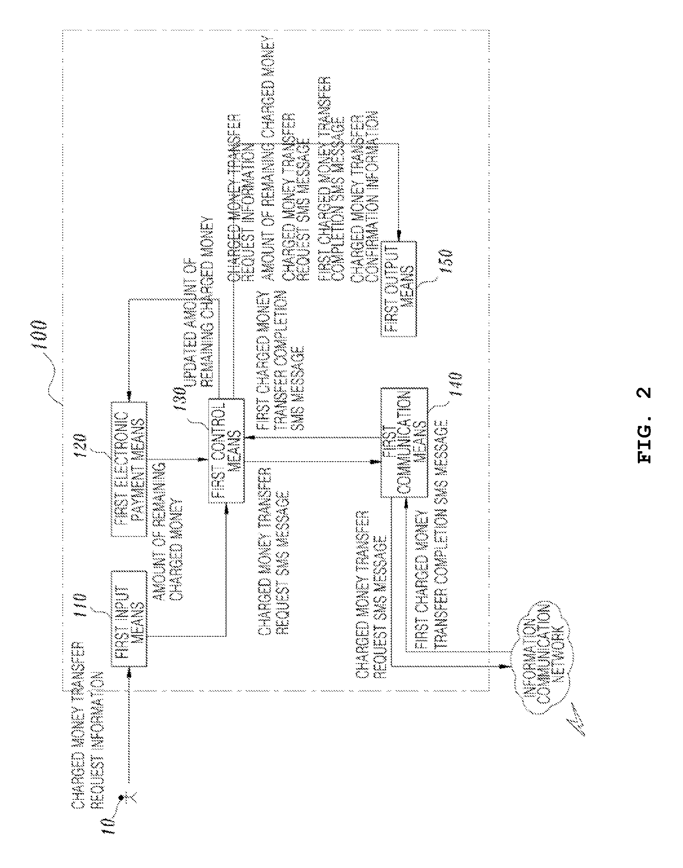

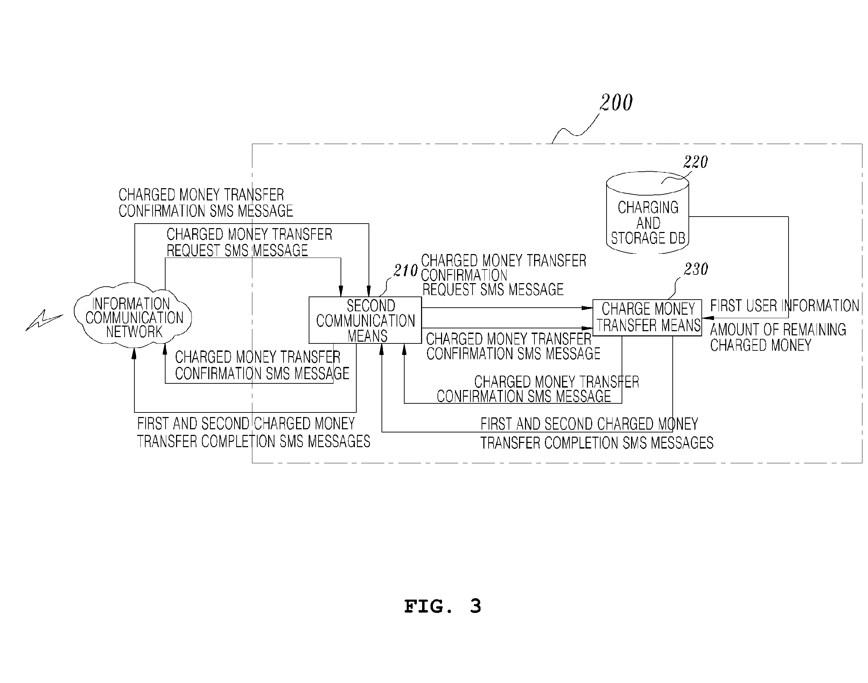

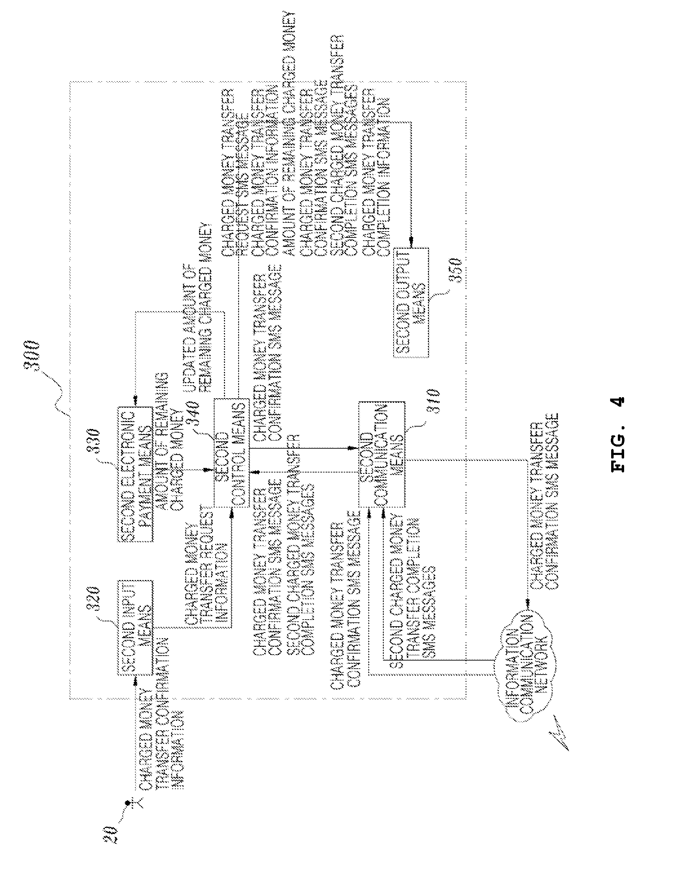

FIG. 1 shows the construction of a system S for transferring the charged money of electronic payment means using a mobile phone according to a first embodiment of the present invention, FIG. 2 is a diagram showing the relationship between the elements of a first user terminal 100 in the system for transferring the charged money of electronic payment means using a mobile phone according to the first embodiment of the present invention, FIG. 3 is a diagram showing the relationship between the elements of a charging server 200 in the system for transferring the charged money of electronic payment means using a mobile phone according to the first embodiment of the present invention, and FIG. 4 is a diagram showing the relationship between the elements of a second user terminal 300 in the system for transferring the charged money of electronic payment means using a mobile phone according to the first embodiment of the present invention.

The system S for transferring the charged money of electronic payment means using a mobile phone according to the first embodiment of the present invention, as shown in FIG. 1, includes the first user terminal 100, the charging server 200, and the second user terminal 300.

Although not mentioned below, it is assumed that the transmission of information between the first user terminal 100, the charging server 200 and the second user terminal 300 according to the present invention is performed over an information communication network, including a Wireless Access Protocol (WAP), which is a protocol supporting a wireless Internet, and it is also assumed that the first user terminal 100 and the second user terminal 300 are Third Generation (3G) terminals including respective smart cards (hereinafter referred to as 'first electronic payment means' and 'second electronic payment means') and respective Virtual Machines (VMs) capable of providing access to the charging server 200.

The first user terminal 100 performs the functions of indexing the amount of remaining charged money stored in the first electronic payment means on the basis of charged money transfer request information received from the first user 10, sending a generated charged money transfer request SMS message if the money to be transferred is smaller than the amount of remaining charged money, receiving a first charged money transfer completion SMS message, and updating the amount of remaining charged money stored in the first electronic payment means. The first user terminal 100 includes first input means 110, first electronic payment means 120, first control means 130, first communication means 140, and first output means 150.

More particularly, referring to FIG. 2, the first input means 110 receives charged money transfer request information in response to a manipulation of the first user 10. The first electronic payment means 120 stores the amount of remaining charged money of the first user, the ID number of the first user terminal, charged money transfer request information, and charged money transfer completion information.

Here, the first electronic payment means 120 is formed of any one of a Universal Subscriber Identity Module (USIM) chip and an Over The Air (OTA) chip inserted into the first user terminal 100, and the charged money transfer request information includes the money to be transferred, the ID number of the second user terminal, and the first user ID number.

The first control means 130 receives charged money transfer request information, indexes the amount of remaining charged money, stored in the first electronic payment means 120, generates a charged money transfer request SMS message if the money to be transferred is smaller than the amount of remaining charged money, updates the amount of remaining charged money stored in the first electronic payment means 120 on the basis of a first charged money transfer completion SMS message, and generates charged money transfer confirmation information indicating the completion of charging after the amount of remaining charged money is updated.

Here, the updating of the amount of remaining charged money stored in the first electronic payment means 120 is performed by updating the amount of remaining charged money included in first user information by subtracting the money requested to be transferred, included in the charged money transfer request information, from the amount of remaining charged money of a first user 10 previously stored on the basis of the first charged money transfer completion SMS.

Furthermore, if the money to be transferred is greater than the amount of remaining charged money indexed on the basis of the charged money transfer request information, charged money transfer request information is received from the first user 10 again.

The first communication means 140 sends the charged money transfer request SMS message, and receives the first charged money transfer completion SMS message in response thereto. The first output means 150 outputs the charged money transfer request information, the amount of remaining charged money, the charged money transfer request SMS message, the first charged money transfer completion SMS message, and charged money transfer confirmation information.

The charging server 200 performs the functions of indexing the first user information, previously stored, on the basis of the charged money transfer request SMS message, generating and sending the charged money transfer confirmation request SMS message, receiving the charged money transfer confirmation SMS message, updating the first and second user information, previously stored, on the basis of the received charged money transfer confirmation SMS message, and sending the first and second charged money transfer completion SMS messages. The charging server 200 includes second communication means 210, a charging and storage DB 220, and charge money transfer means 230.

More particularly, referring to FIG. 3, the second communication means 210 sends a charged money transfer confirmation request SMS message in response to a received charged money transfer request SMS message, and sends the first and second charged money transfer completion SMS messages in response to the charged money transfer confirmation SMS message.

The charging and storage DB 220 stores the first and second user information, the charged money transfer confirmation request SMS message, the charged money transfer confirmation SMS message, and the first and second charged money transfer completion SMS messages. Here, the first and second user information includes the first and second user ID numbers, the terminal ID numbers of the first and second users, and the remaining amounts of charged money of the first and second users.

The charge money transfer means 230 indexes the first user information in response to the charged money transfer request SMS message and generates the charged money transfer confirmation request SMS message.

Furthermore, the charge money transfer means 230 subtracts the money requested to be transferred, included in the charged money transfer request information, from the amount of remaining charged money of the first user, previously stored, in response to the charged money transfer confirmation SMS message, updates the first and second user information by increasing or decreasing the amount of remaining charged money of the second user by the subtracted amount of money, and generates the first and second charged money transfer completion SMS messages.

The second user terminal 300 performs the functions of receiving the charged money transfer confirmation request SMS message, generating the charged money transfer confirmation SMS message on the basis of the charged money transfer confirmation information received from the second user 20, sending the generated charged money transfer confirmation SMS message, receiving the second charged money transfer completion SMS message, and updating the amount of remaining charged money, stored in the second electronic payment means, on the basis of the second charged money transfer completion SMS message. The second user terminal 300 includes second communication means 310, second input means 320, second electronic payment means 330, second control means 340, and second output means 350.

More particularly, referring to FIG. 4, the second communication means 310 receives the charged money transfer confirmation request SMS message, sends the charged money transfer confirmation SMS message in response thereto, and receives the second charged money transfer completion SMS message.

The second input means 320 receives charged money transfer confirmation information in response to the manipulation of the second user 20. The second electronic payment means 330 stores the amount of remaining charged money, the second user terminal ID number, the charged money transfer confirmation information, and the charged money transfer completion information.

Here, the second electronic payment means 330 is formed of any one of a USIM chip and an OTA chip, like the first electronic payment means 120. The charged money transfer confirmation information includes the money to be received and the first user terminal ID number.

The second control means 340 receives the charged money transfer request information and the charged money transfer confirmation request SMS message, generates the charged money transfer confirmation SMS message in response thereto, updates the amount of remaining charged money stored in the second electronic payment means 330 in response to the second charged money transfer completion SMS message, and generates the charged money transfer completion information indicating the completion of charging on the basis of the updated amount of remaining charged money.

Here, the updating of the amount of remaining charged money stored in the second electronic payment means 330 updates the amount of remaining charged money included in the second user information by increasing or decreasing the money whose transfer has been confirmed, included in the charged money transfer confirmation information, on the basis of the amount of remaining charged money of the second user, previously stored, in response to the second charged money transfer completion SMS message.

The second output means 350 outputs the charged money transfer confirmation request SMS message, the charged money transfer confirmation information, the amount of remaining charged money, the charged money transfer confirmation SMS message, the second charged money transfer completion SMS message, and the charged money transfer completion information.

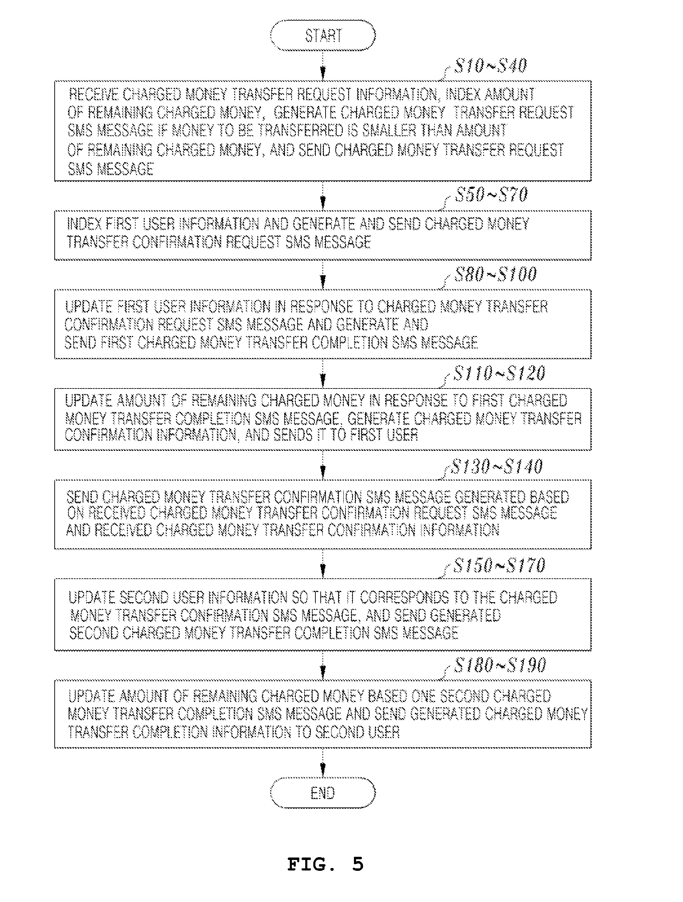

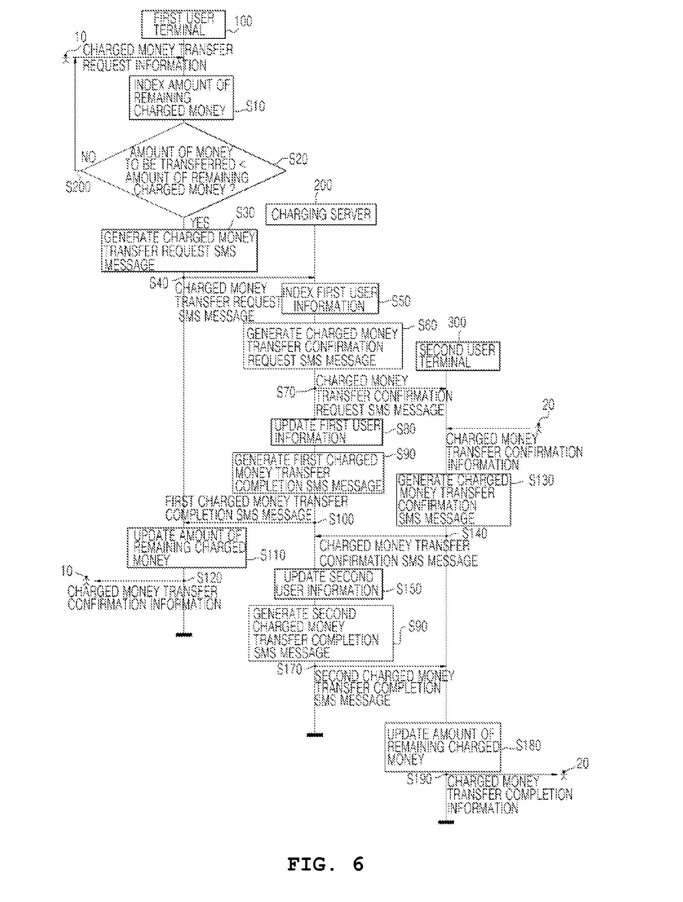

Hereinafter, a method of transferring the amount of charged money using the system S for transferring the charged money of electronic payment means using a mobile phone according to the present invention will be described below with reference to FIGS. 5 and 6.

First, the first user terminal 100 receives charged money transfer request information from the first user 10 and indexes the amount of remaining charged money on the basis of the received charged money transfer request information at step S10. If the money to be transferred is smaller than the amount of remaining charged money, the first user terminal 100 generates a charged money transfer request SMS message at steps S20 and S30, and sends the charged money transfer request SMS message to the charging server 200 at step S40.

Thereafter, the charging server 200 indexes first user information, generates a charged money transfer confirmation request SMS message at steps S50 and S60, and sends the charged money transfer confirmation request SMS message to the second user terminal 300 at step S70.

Thereafter, the charging server 200 updates the first user information indexed in response to the charged money transfer confirmation request SMS message at step S80, generates a first charged money transfer completion SMS message, and sends the first charged money transfer completion SMS message to the first user terminal 100 at steps S90 and S100.

Thereafter, the first user terminal 100 updates the amount of remaining charged money by subtracting the amount of remaining charged money in response to the first charged money transfer completion SMS message at step S110, generates charged money transfer confirmation information, indicating the completion of charging on the basis of the updated amount of remaining charged money, and sends the charged money transfer confirmation information to the first user 10 at step S120.

Meanwhile, the second user terminal 300 receives the charged money transfer confirmation request SMS message from the charging server 200 at step S70, receives charged money transfer confirmation information from the second user 20, generates a charged money transfer confirmation SMS message on the basis of the received charged money transfer confirmation information at step S130, and sends the charged money transfer confirmation SMS message to the charging server 200 at step S140.

Thereafter, the charging server 200 receives the charged money transfer confirmation SMS message, updates second user information in response thereto at step S150, generates a second charged money transfer completion SMS message at step S160, and sends the second charged money transfer completion SMS message to the second user terminal 300 at step S170.

Thereafter, the second user terminal 300 updates the amount of remaining charged money on the basis of the second charged money transfer completion SMS message at step S180, generates charged money transfer completion information indicating the completion of charging upon the updating of the amount of remaining charged money, and sends the charged money transfer completion information to the second user 20 at step S190.

Furthermore, if the money to be transferred is greater than the indexed amount of remaining charged money at step S20, the first user terminal receives charged money transfer request information from the first user again at step S200.

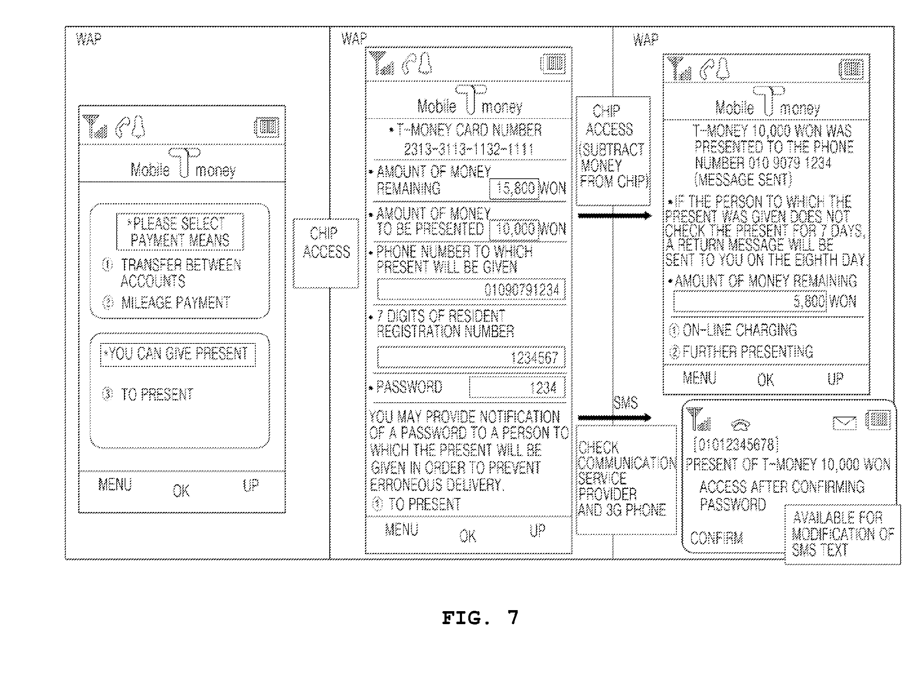

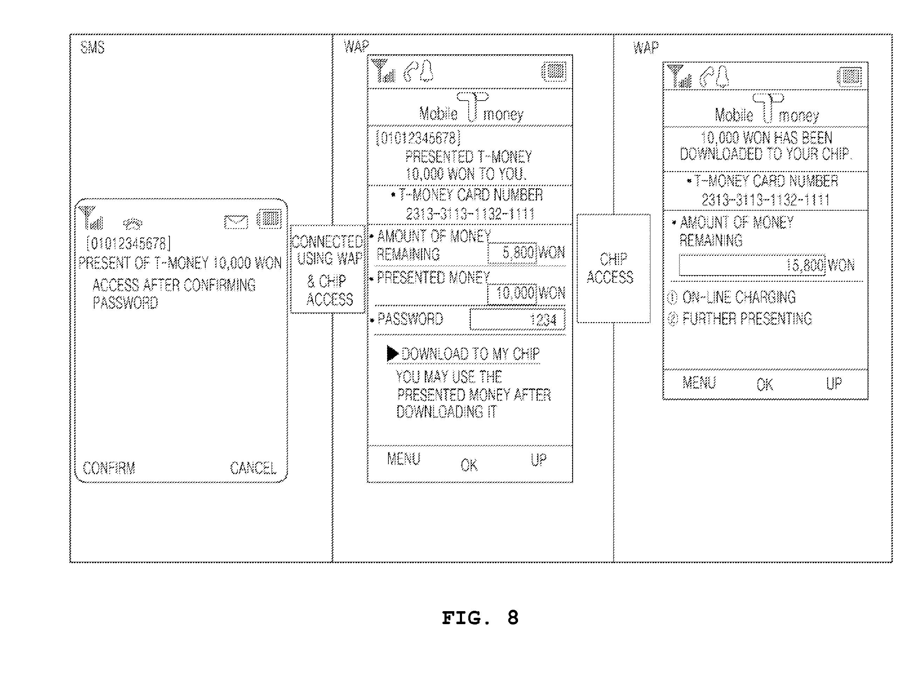

FIGS. 7 and 8 are diagrams showing examples of the method of transferring the amount of charged money using the system S for transferring the charged money of electronic payment means using a mobile phone according to the present invention. It is preferred that, in FIG. 7, 'To present' be understood as charged money transfer request information, the index of the first electronic payment means be interpreted as Chip access, the existing balance be interpreted as the amount of remaining charged money of the first user terminal 100, and a mobile phone number to which a present will be given be interpreted as the ID number of the second user terminal.

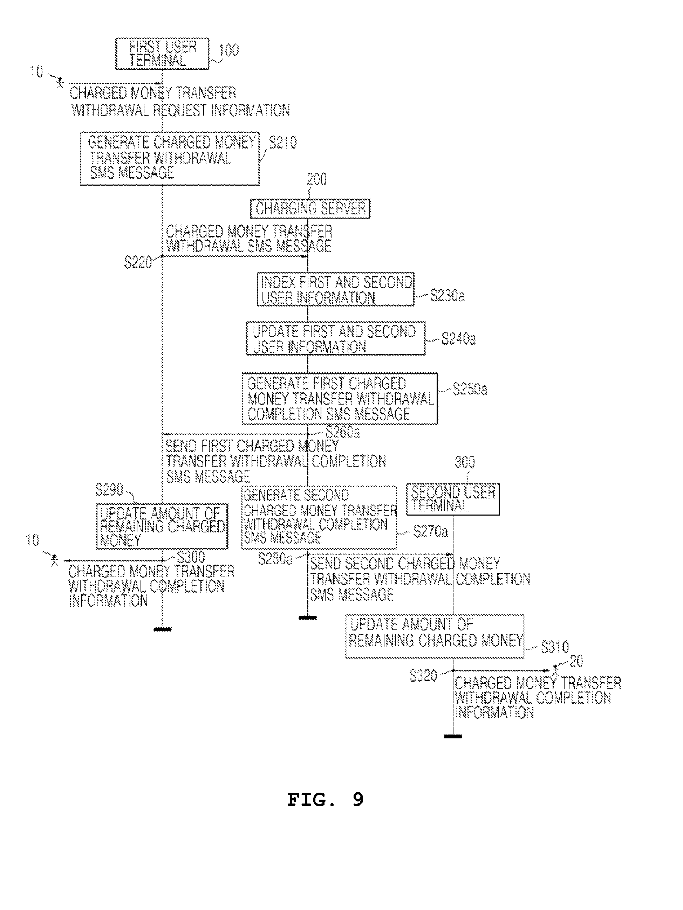

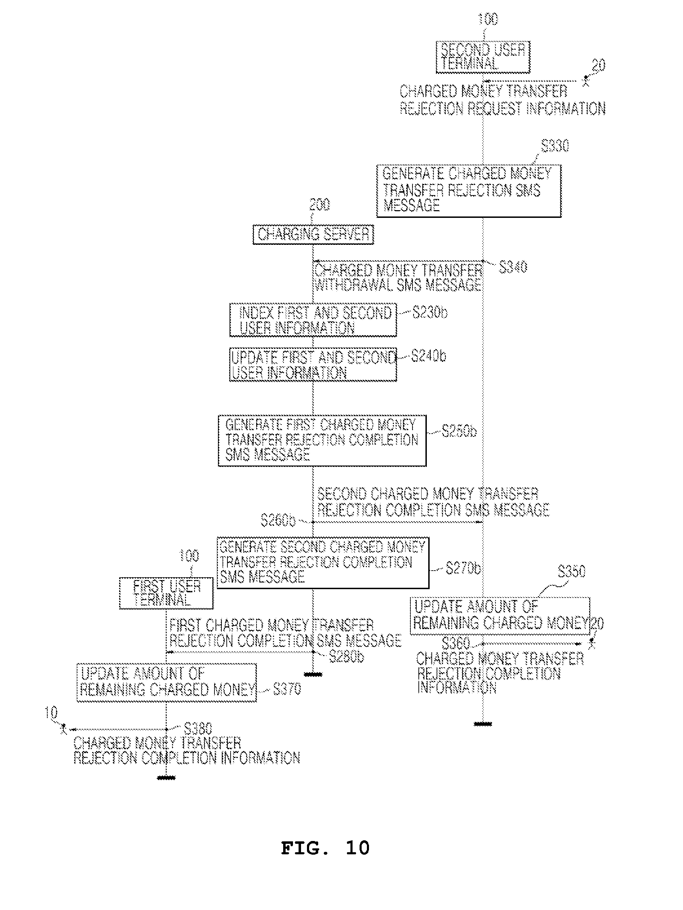

Hereinafter, the withdrawal and rejection methods of the method of transferring the amount of charged money using the system S for transferring the charged money of electronic payment means using a mobile phone according to the first embodiment of the present invention will be described with reference to FIGS. 9 and 10.

Although not mentioned below, it is assumed that the generation of a charged money transfer withdrawal SMS message, the updating of the amount of remaining charged money according to a first charged money transfer withdrawal completion SMS message, and the updating of the amount of remaining charged money according to a first charged money transfer rejection completion SMS message in the withdrawal and rejection methods of the method of transferring the amount of charged money are performed by the first control means 130 of the first user terminal 100.

It is also assumed that the updating of the amount of remaining charged money according to a second charged money transfer withdrawal completion SMS message, the generation of a charged money transfer rejection SMS message, and the updating of the amount of remaining charged money according to a second charged money transfer rejection completion SMS message are performed by the second control means 340 of the second user terminal 300.

First, the method of withdrawing the transfer of the amount of charged money is described below with reference to FIG. 9. The first user terminal 100 generates a charged money transfer withdrawal SMS message on the basis of charged money transfer withdrawal request information received from the first user 10 and sends the charged money transfer withdrawal SMS message to the charging server 200 at steps S210 and S220.

Thereafter, the charging server 200 indexes first and second user information corresponding to the received charged money transfer withdrawal SMS message at step S230a, updates the first and second user information at step S240a, generates a first charged money transfer withdrawal completion SMS message at step S250a, sends the first charged money transfer withdrawal completion SMS message to the first user terminal 100 at step S260a, generates a second charged money transfer withdrawal completion SMS message at step S270a, and sends the second charged money transfer withdrawal completion SMS message to the second user terminal 300 at step S280a.

Thereafter, the first user terminal 100 updates the amount of remaining charged money, subtracted on the basis of the first charged money transfer withdrawal completion SMS message, by increasing or decreasing the amount of remaining charged money at step S290, generates charged money transfer withdrawal completion information indicating the completion of charging on the basis of the updated of the amount of remaining charged money, and sends the charged money transfer withdrawal completion information to the first user 10 at step S300.

Thereafter, the second user terminal 300 updates the amount of remaining charged money, increased or decreased on the basis of the second charged money transfer withdrawal completion SMS message, by increasing or decreasing the amount of remaining charged money at step S310, generates charged money transfer withdrawal completion information indicating the completion of charging on the basis of the updated amount of remaining charged money, and sends the charged money transfer withdrawal completion information to the second user 20 at step S320.

Meanwhile, the method of rejecting the transfer the amount of charged money according to the first embodiment of the present invention will now be described below with reference to FIG. 10. The second user terminal 300 generates a charged money transfer rejection SMS message on the basis of charged money transfer rejection request information received from the second user 20 at step S330 and sends the charged money transfer rejection SMS message to the charging server 200 at step S340.

Thereafter, the charging server 200 indexes first and second user information corresponding to the received charged money transfer rejection SMS message at step S230b, updates the first and second user information at step S240b, generates a second charged money transfer rejection completion SMS message at step S250b, sends the second charged money transfer rejection completion SMS message to the second user terminal 300 at step S260b, generates a first charged money transfer withdrawal completion SMS message at step S270b, and sends the first charged money transfer withdrawal completion SMS message to the first user terminal 100 at step S280b.

Thereafter, the second user terminal 300 updates the amount of remaining charged money, increased or decreased on the basis of the second charged money transfer rejection completion SMS message, by subtracting the amount of remaining charged money at step S350, generates charged money transfer rejection completion information indicating the rejection of the transfer of the amount of charged money on the basis of the updated amount of remaining charged money, and sends the charged money transfer rejection completion information to the second user 20 at step S360.

Thereafter, the first user terminal 100 updates the amount of remaining charged money, subtracted on the basis of the first charged money transfer rejection completion SMS message, by increasing or decreasing the amount of remaining charged money at step S370, generates charged money transfer rejection completion information indicating that the transfer of the amount of charged money has been rejected on the basis of the updated amount of remaining charged money, and sends the charged money transfer rejection completion information to the first user 10 at step S380.

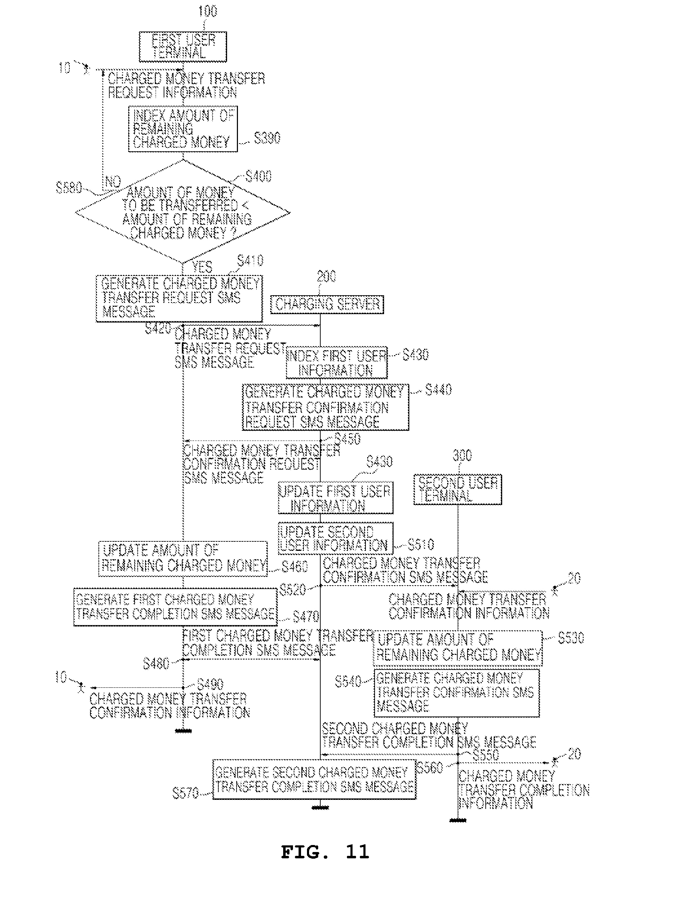

Hereinafter, a method of transferring the amount of charged money according to a second embodiment of the present invention is described. The method of transferring the charged money of electronic payment means using a mobile phone according to the second embodiment is based on the system and method of the first embodiment, but the processing process by which charged money transfer is processed between the first user terminal, the charging server, and the second user terminal, as shown in FIG. 11, differs from that of the first embodiment.

That is, in the first embodiment, the charging server 200 which has received the charged money transfer request SMS message from the first user terminal 100 updates the amount of remaining charged money of the first user information by subtracting the amount of charged money, generates the first charged money transfer completion SMS message, and sends the first charged money transfer completion SMS message to the first user terminal 100. Thereafter, when the first charged money transfer completion SMS message is received, the first user terminal 100 updates the amount of remaining charged money stored therein by subtracting the amount of remaining charged money and completes a task of transferring the amount of charged money.

Furthermore, the second user terminal 300 receives the charged money transfer confirmation request SMS message, receives the charged money transfer confirmation information from the second user 20, and sends the generated charged money transfer confirmation SMS message to the charging server 200. The charging server 200 subtracts the amount of charged money, updates the amount of remaining charged money of the second user information by increasing or decreasing the amount of remaining charged money, and sends the generated second charged money transfer completion SMS message to the second user terminal 300. Thereafter, when the second charged money transfer completion SMS message is received, the second user terminal 300 updates the amount of remaining charged money stored therein by increasing or decreasing the amount of remaining charged money, and completes the task of transferring the amount of charged money.

In contrast, in the method of transferring the amount of charged money according to the second embodiment of the present invention, the charging server 200 which has received a charged money transfer request SMS message from the first user terminal 100 sends a charged money transfer confirmation request SMS message, generated by indexing first user information, to the first user terminal 100 at steps S390 to S450.

Thereafter, the first user terminal 100 which has received the charged money transfer confirmation request SMS message updates the amount of remaining charged money stored therein by subtracting the amount of remaining charged money, generates a first charged money transfer completion SMS message, generates a first charged money transfer completion SMS message, sends the first charged money transfer completion SMS message to the charging server 200, and sends charging money transfer confirmation information to the first user 10 at steps S460 to S490.

Thereafter, the charging server 200 updates the amount of remaining charged money of the first user information, indexed on the basis of the first charged money transfer completion SMS message at step S500, and generates a charged money transfer confirmation request SMS message by indexing second user information and sends the generated charged money transfer confirmation request SMS message to the second user terminal 300 at steps S510 and S520.

Thereafter, the second user terminal 300 which has received charged money transfer confirmation information from the second user 20 updates the amount of remaining charged money stored therein by increasing or decreasing the amount of remaining charged money, generates a second charged money transfer completion SMS message, sends the second charged money transfer completion SMS message to the charging server 200, and sends charged money transfer completion information to the second user 20 at steps S530 to S560.

Thereafter, the charging server 200 updates the amount of remaining charged money of the second user, indexed on the basis of the second charged money transfer completion SMS message, by increasing or decreasing the amount of remaining charged money, and generates a second charged money transfer completion SMS message at step S570.

Furthermore, like at step S200 of the first embodiment, if the money to be transferred is greater than the indexed amount of remaining charged money, the first user terminal receives money transfer request information from the first user again at step S580.

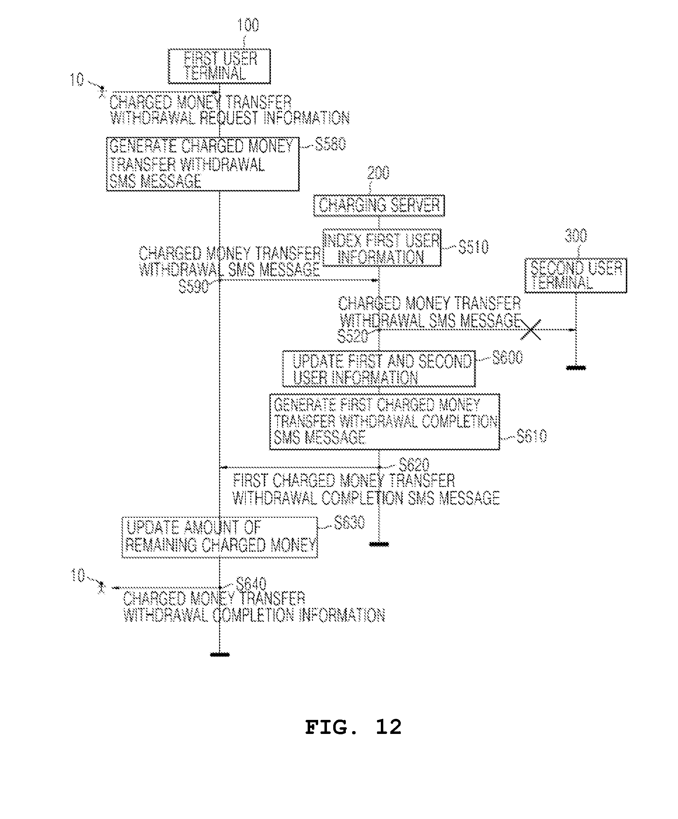

Hereinafter, a process of withdrawing the transfer of the amount of charged money in the method of transferring the amount of charged money according to the second embodiment of the present invention will be described with reference to FIG. 12.

The first user terminal 100 receives charged money transfer withdrawal request information from the first user 10. The first user terminal 100 generates a charged money transfer withdrawal SMS message at step S580, and sends the charged money transfer withdrawal SMS message to the charging server 200 at step S590.

Here, if the charged money transfer withdrawal SMS message is received from the first user terminal 100 before the step S520, that is, before the charging server 200 performs the procedure of sending the charged money transfer confirmation request SMS message to the second user terminal 300, the charging server 200 updates the amount of remaining charged money of the first user by increasing or decreasing the amount of remaining charged money at step S600, generates a first charged money transfer withdrawal completion SMS message, and sends the first charged money transfer withdrawal completion SMS message to the first user terminal 100 at steps S610 and S620.

Thereafter, the first user terminal 100 updates the amount of charged money stored therein by increasing or decreasing the amount of charged money on the basis of the first charged money transfer withdrawal completion SMS message and sends generated charged money transfer withdrawal completion information to the first user 10 at steps S630 and S640.

Although the present invention has been described in conjunction with the preferred embodiments which illustrate the technical spirit of the present invention, it will be apparent to those skilled in the art that the present invention is not limited only to the illustrated and described configurations and operations themselves but a lot of variations and modifications are possible without departing from the scope of the spirit of the invention. Accordingly, all of appropriate variations, modifications and equivalents are considered to pertain to the scope of the present invention.

## Claims

1. A system for transferring an amount of charged money of electronic payment means using a mobile phone, the system comprising:
a first user terminal (100) for indexing an amount of remaining charged money stored in first electronic payment means (120) based on charged money transfer request information received from a first user (10), sending a generated charged money transfer request SMS message if an amount of money to be transferred is smaller than the amount of remaining charged money, receiving a first charged money transfer completion SMS message, and updating the amount of remaining charged money stored in the first electronic payment means (120);
a charging server (200) for indexing first user information previously stored in response to the charged money transfer request SMS message, generating and sending a charged money transfer confirmation request SMS message, receiving a charged money transfer confirmation SMS message, updating the first and second user information previously stored in a charging and storage DB (220), and sending the first and second charged money transfer completion SMS messages generated; and
a second user terminal (300) for receiving the charged money transfer confirmation request SMS message, generating and sending a charged money transfer confirmation SMS message based on charged money transfer confirmation information received from a second user (20), receiving the second charged money transfer completion SMS message, and updating an amount of remaining charged money stored in a second electronic payment means (330).

2. The system according to claim 1, wherein the first user terminal (100) comprises:
first input means (110) for receiving the charged money transfer request information in response to a manipulation of the first user (10);
first electronic payment means (120) for storing the amount of remaining charged money of the first user, an ID number of the first user terminal, the charged money transfer request information, and charged money transfer completion information;
first control means (130) for indexing the amount of remaining charged money, stored in the first electronic payment means (120), based on the charged money transfer request information, generating the charged money transfer request SMS message if the money to be transferred is smaller than the amount of remaining charged money, updating the amount of remaining charged money stored in the first electronic payment means (120) based on the first charged money transfer completion SMS message, and generating the charged money transfer confirmation information, indicating completion of charging, based on the updating of the amount of remaining charged money;
first communication means (140) for sending the charged money transfer request SMS message and receiving the first charged money transfer completion SMS message; and
first output means (150) for outputting the charged money transfer request information, the amount of remaining charged money, the charged money transfer request SMS message, the first charged money transfer completion SMS message, and the charged money transfer confirmation information.

3. The system according to claim 1, wherein the charged money transfer request information comprises the money to be transferred, an ID number of the second user terminal and an ID number of the first user.

4. The system according to claim 1, wherein the updating of the amount of remaining charged money stored in the first electronic payment means (120) is performed by updating an amount of remaining charged money included in the first user information by subtracting the money requested to be transferred, included in the charged money transfer request information, from the amount of remaining charged money of the first user, stored in the first electronic payment means (120), in response to the first charged money transfer completion SMS message.

5. The system according to claim 1, wherein the charging server (200) comprises:
second communication means (210) for sending the charged money transfer confirmation request SMS message in response to the received charged money transfer request SMS message, and sending the first and second charged money transfer completion SMS messages in response to the received charged money transfer confirmation SMS message;
charging and storage DB (220) for storing the first and second user information, the charged money transfer confirmation request SMS message, the charged money transfer confirmation SMS message, and the first and second charged money transfer completion SMS messages; and
charge money transfer means (230) for generating the charged money transfer confirmation request SMS message by indexing the first user information based on the charged money transfer request SMS message, subtracting the money requested to be transferred, included in the charged money transfer request information, from the amount of remaining charged money of the first user, previously stored in the charging and storage DB (220), based on the charged money transfer confirmation SMS message, updating the first and second user information by increasing or decreasing an amount of remaining charged money of the second user by a reduced amount of money, and generating the first and second charged money transfer completion SMS messages.

6. The system according to claim 1, wherein the first and second user information comprise ID numbers of the first and second users, ID numbers of the first and second user terminals, and the remaining amounts of charged money of the first and second users.

7. The system according to claim 1, wherein the second user terminal (300) comprises:
third communication means (310) for sending the charged money transfer confirmation SMS message in response to the received charged money transfer confirmation request SMS message, and receiving the second charged money transfer completion SMS message;
second input means (320) for receiving the charged money transfer confirmation information in response to a manipulation of the second user (20);
second electronic payment means (330) for storing an amount of remaining charged money of the second user, an ID number of the second user terminal, the charged money transfer confirmation information, and the charged money transfer completion information;
second control means (340) for generating the charged money transfer confirmation SMS message based on the charged money transfer request information and the charged money transfer confirmation request SMS message, updating the amount of remaining charged money, stored in the second electronic payment means (330), based on the second charged money transfer completion SMS message, and generating the charged money transfer completion information, indicating updating of charging, based on the updating of the amount of remaining charged money; and
second output means (350) for outputting the charged money transfer confirmation request SMS message, the charged money transfer confirmation information, the amount of remaining charged money, the charged money transfer confirmation SMS message, the second charged money transfer completion SMS message, and the charged money transfer completion information.

8. The system according to claim 1, wherein the updating of the amount of remaining charged money stored in the second electronic payment means (330) is performed by updating an amount of remaining charged money stored in the second user information by increasing or decreasing an amount of money to be transferred, included in the charged money transfer confirmation information, based on the amount of remaining charged money of the second user, previously stored in the second electronic payment means (330), based on the second charged money transfer completion SMS message.

9. A method of transferring an amount of charged money of electronic payment means using a mobile phone, the method comprising:
a first process of a first user terminal (100) indexing an amount of remaining charged money based on charged money transfer request information received from a first user (10), generating a charged money transfer request SMS message if an amount of money to be transferred is smaller than the amount of remaining charged money, and sending the charged money transfer request SMS message to a charging server (200);
a second process of the charging server (200) generating a charged money transfer confirmation request SMS message by indexing first user information and sending the charged money transfer confirmation request SMS message to a second user terminal (300);
a third process of the second user terminal (300) receiving the charged money transfer confirmation request SMS message, generating a charged money transfer confirmation SMS message based on charged money transfer confirmation information received from a second user (20), and sending the charged money transfer confirmation SMS message to the charging server (200);
a fourth process of the charging server (200) updating the first user information and second user information based on the charged money transfer confirmation SMS message, generating a first charged money transfer completion SMS message, sending the first charged money transfer completion SMS message to the first user terminal (100), generating a second charged money transfer completion SMS message, and sending the second charged money transfer completion SMS message to the second user terminal (300);
a fifth process of the first user terminal (100) updating an amount of remaining charged money based on the first charged money transfer completion SMS message, generating charged money transfer confirmation information indicating the completion of charging based on the updating of the amount of remaining charged money, and sending the charged money transfer confirmation information to the first user (10); and
a sixth process of the second user terminal (300) updating the amount of remaining charged money based on the second charged money transfer completion SMS message, generating charged money transfer completion information indicating the completion of charging based on the updating of the amount of remaining charged money, and sending the charged money transfer completion information to the second user (20).

10. The method according to claim 9, further comprising a seventh process of receiving charged money transfer request information from the first user (10) again if the money to be transferred is greater than the indexed amount of remaining charged money during the first process.

11. The method according to claim 9, further comprising, after the sixth process:
an eighth process of a first user terminal (400) generating a charged money transfer withdrawal SMS message based on charged money transfer withdrawal request information received from the first user (10) and sending the charged money transfer withdrawal SMS message to a charging server (500);
a ninth process of the charging server (500) updating first and second user information by indexing first and second user information corresponding to the charged money transfer withdrawal SMS message, generating a first charged money transfer withdrawal completion SMS message, sending the first charged money transfer withdrawal completion SMS message to the first user terminal (400), generating a second charged money transfer withdrawal completion SMS message, and sending the second charged money transfer withdrawal completion SMS message to a second user terminal (600);
a tenth process of the first user terminal (400) updating an amount of remaining charged money based on the first charged money transfer withdrawal completion SMS message, generating charged money transfer withdrawal completion information indicating the completion of charging based on the updating of the amount of remaining charged money, and sending the charged money transfer withdrawal completion information to the first user (10); and
an eleventh process of the second user terminal (600) updating the amount of remaining charged money based on the second charged money transfer withdrawal completion SMS message, generating charged money transfer withdrawal completion information indicating the completion of charging based on the updating of the amount of remaining charged money, and sending the charged money transfer withdrawal completion information to the second user (20).

12. The method according to claim 9, further comprising, after the sixth process:
a twelfth process of a second user terminal (600) generating a charged money transfer rejection SMS message based on charged money transfer rejection request information received from the second user (20) and sending the charged money transfer rejection SMS message to a charging server (500);
a thirteenth process of the charging server (500) updating first and second user information by indexing the first and second user information corresponding to the charged money transfer rejection SMS message, generating a second charged money transfer rejection completion SMS message, sending the second charged money transfer rejection completion SMS message to the second user terminal (600), generating a first charged money transfer withdrawal completion SMS message, and sending the first charged money transfer withdrawal completion SMS message to a first user terminal (400);
a fourteenth process of the second user terminal (600) updating an amount of remaining charged money based on the second charged money transfer rejection completion SMS message, generating charged money transfer rejection completion information indicating rejection of a transfer of the amount of charged money based on the updating of the amount of remaining charged money, and sending the charged money transfer rejection completion information to the second user (20); and
a fifteenth process of the first user terminal (400) updating the amount of remaining charged money based on the first charged money transfer rejection completion SMS message, generating charged money transfer rejection completion information indicating rejection of a transfer of the amount of charged money based on the updating of the amount of remaining charged money, and sending the charged money transfer rejection completion information to the first user (10).

13. A method of transferring an amount of charged money of electronic payment means using a mobile phone, the method comprising:
a sixteenth process of a charging server (200) sending a charged money transfer confirmation request SMS message, generated by indexing first user information based on a charged money transfer request SMS message received from a first user terminal (100), to the first user terminal (100);
a seventeenth process of the first user terminal (100) updating an amount of remaining charged money stored therein by subtracting the amount of remaining charged money based on the charged money transfer confirmation request SMS message, generating a first charged money transfer completion SMS message, and sending the first charged money transfer completion SMS message to a first user (10) and the charging server (200);
an eighteenth process of the charging server (200) updating the amount of remaining charged money of the indexed first user information by subtracting the amount of remaining charged money based on the first charged money transfer completion SMS message, and sending a charged money transfer confirmation request SMS message, generated by indexing second user information, to a second user terminal (300);
a nineteenth process of the second user terminal (300) updating an amount of remaining charged money stored therein by increasing or decreasing the amount of remaining charged money based on charged money transfer confirmation information received from a second user (20), generating a second charged money transfer completion SMS message, and sending the second charged money transfer completion SMS message to the charging server (200) and the second user (20); and
a twentieth process of the charging server (200) updating the amount of remaining charged money of the indexed second user by increasing or decreasing the amount of remaining charged money of the indexed second user based on the second charged money transfer completion SMS message.

14. The method according to claim 13, further comprising:
a twenty-first process of the first user terminal (100) sending a charged money transfer withdrawal SMS message, generated based on charged money transfer withdrawal request information received from the first user (10), to the charging server (200);
a twenty-second process of the charging server (200), when first charged money transfer withdrawal SMS message is received before the sixteenth process is performed, updating the amount of remaining charged money of the first user (10) by increasing or decreasing the amount of remaining charged money, generating a first charged money transfer withdrawal completion SMS message, and sending the first charged money transfer withdrawal completion SMS message to the first user terminal (100); and
a twenty-third process of the first user terminal (100) updating an amount of charged money stored therein by increasing or decreasing the amount of charged money stored therein based on the first charged money transfer withdrawal completion SMS message, generating charged money transfer withdrawal completion information, and sending the charged money transfer withdrawal completion information to the first user (10).
